# EUROPEAN PATENT SPECIFICATION

(11) **EP 4 530 889 B1**
(45) Date of publication and mention of the grant of the patent: **03.06.2026**
(21) Application number: 23810960.7
(22) Date of filing: 19.05.2023
(51) Int. Cl.: H04L 51/02, H04L 51/18, H04L 51/216, G06F 16/9535

(54) **DEVICE CONFIGURATION METHOD AND SYSTEM, AND COMPUTER DEVICE AND READABLE STORAGE MEDIUM**
VERFAHREN UND SYSTEM ZUR KONFIGURATION VON VORRICHTUNGEN SOWIE COMPUTERVORRICHTUNG UND LESBARES SPEICHERMEDIUM
PROCÉDÉ ET SYSTÈME DE CONFIGURATION DE DISPOSITIF, DISPOSITIF INFORMATIQUE ET SUPPORT DE STOCKAGE LISIBLE

(30) Priority: 23.05.2022 CN 202210565079
(43) Date of publication of application: 02.04.2025
(73) Proprietor: Lumi United Technology Co., Ltd., Shenzhen, Guangdong 518000 (CN)
(72) Inventor: WU, Huifang, Shenzhen, Guangdong 518000 (CN); ZHANG, Long, Shenzhen, Guangdong 518000 (CN)
(74) Representative: Chung, Hoi Kan
(86) International application number: PCT/CN2023/095254
(87) International publication number: WO 2023/226889

(56) References cited:
- CN-A- 105 099 840
- CN-A- 108 600 027
- CN-A- 109 547 306
- CN-A- 109 698 777
- CN-A- 113 341 755
- CN-A- 114 265 325
- CN-A- 115 062 213
- US-A1- 2017 052 514
- US-A1- 2017 195 176

## Description

The present disclosure claims priority of Chinese patent application No. CN2022105650797 with an invention title "DEVICE CONFIGURATION METHOD, SYSTEM, COMPUTER DEVICE, AND READABLE STORAGE MEDIUM" filed on May 23, 2022.

### TECHNICAL FIELD

The present disclosure relates to the technical field of smart home technology, and in particular, the present disclosure relates to a device configuration method, system, computer device, and readable storage medium.

### BACKGROUND

Intelligent devices have been widely used in various scenes, including home and other settings. Taking smart homes as an example, one of the core functions of smart homes is to automatically control intelligent devices, thereby achieving the goal of smart homes and enhancing the experience of home living.

Intelligent devices need to be configured for some control operations that they will perform automatically. Users can configure intelligent devices according to their own habits. For users who are new to smart homes, they may not understand the rules of intelligent device configuration, which makes it difficult to actively carry out automated configuration. For experienced users, their configured instructions may also deviate from their actual living habits.

Documents of CN108600027A, US20170195176A1, and CN 109547306A have disclosed some examples of wirless device control method, method for recommending device configuration, or smart home equipment management method.

### SUMMARY OF THE DISCLOSURE

The present invention provides a device configuration method, a device configuration system, a device configuration apparatus, a computer device and a computer-readable storage medium as set out in the appended set of claims .

### BRIEF DESCRIPTION OF THE DRAWINGS

In order to explain technical solutions in embodiments of the present disclosure more clearly, drawings required to be used in description of the embodiments of the present disclosure will be briefly introduced below. It is obvious that the drawings in the following description are only some embodiments of the present disclosure. For one of ordinary skill in the art, other drawings can be further obtained according to these drawings on the premise of paying no creative work.
FIG.1 is a schematic diagram of a smart home system architecture provided in an embodiment of the present application;
FIG.2 is a flow diagram of a device configuration method provided in an embodiment of the present application;
FIG.3A is a schematic diagram of an application interface provided in an embodiment of the present application;
FIG.3B is a schematic diagram of a notification message display interface provided in an embodiment of the present application;
FIG.3C is a schematic diagram of a device configuration item list provided in an embodiment of the present application;
FIG.3D is a schematic diagram of a device configuration item configuration interface provided in an embodiment of the present application;
FIG.4 is a flow diagram of a method for generating device configuration items provided in an embodiment of the present application;
FIG.5 is a system data flow diagram provided in an embodiment of the present application;
FIG.6 is a schematic diagram illustrating the differences between the device configuration method provided in an embodiment of the present application and existing technology;
FIG.7 is a schematic diagram of the structure of a computer device provided in an embodiment of the present application;
FIG.8 is a schematic diagram of the structure of another computer device provided in an embodiment of the present application.

### DETAILED DESCRIPTION

Further detailed description of the present application will be provided through specific embodiments in conjunction with the accompanying drawings. In different embodiments, similar components are designated with corresponding reference numbers. Many of the detailed descriptions provided below are intended to enable a better understanding of the present application. However, those skilled in the art will readily recognize that some features can be omitted or replaced by other components, materials, or methods under different circumstances. In some cases, certain operations related to the present application are not shown or described in the specification in order to avoid overwhelming the core aspects of the application with excessive details. For those skilled in the art, a detailed description of these operations is not necessary, as they can fully understand the relevant operations based on the description in the specification and general technical knowledge in the field.

Additionally, the features, operations, or characteristics described in the specification can be combined in any appropriate manner to form various embodiments. At the same time, the steps or actions described in the method can be rearranged or adjusted in a manner that is apparent to those skilled in the field. Therefore, the various orders in the specification and drawings are for the purpose of clearly describing a particular embodiment and do not necessarily represent the required order, unless otherwise specified that a particular order must be followed.

The serial numbers assigned to components in this text, such as "first," "second," etc., are used solely to distinguish the described objects and do not have any order or technical significance. The terms "connected" or "coupled," as used in this application, unless otherwise specified, include both direct and indirect connections.

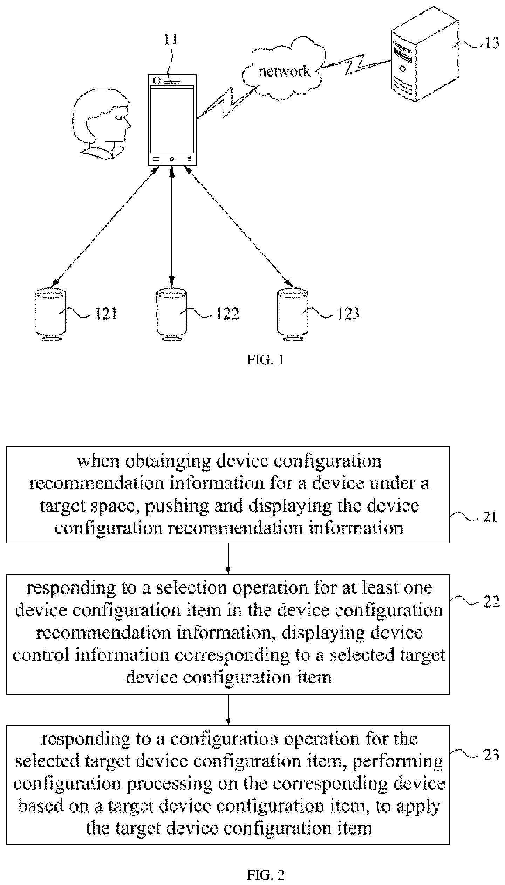

The configuration method for smart devices provided in this application can be applied to the application environment shown in FIG.1. An exemplary illustration will be provided using a smart home system as the application environment.

Please refer to FIG.1, which is an architectural diagram of a smart home system provided in an embodiment of the present application. The smart home system can include: terminal devices 11 and smart devices. Three smart devices are exemplarily shown in the figure, namely smart device 121, smart device 122, and smart device 123. Terminal device 11 is communicatively connected with the smart devices, and different smart devices may or may not be connected to each other. The terminal device 11 can be configured to control or manage smart devices with networking capabilities. For example, an application (referred to as APP) can be installed on terminal device 11. This application can be a smart home application that, when running, can push device configuration recommendation information for smart devices in the smart home system. Based on the user's selection operation on the recommended configuration prompt information, terminal device 11 displays at least one device configuration item generated based on the user's usage data within a preset time period. The device configuration item is analyzed based on historical device operation data and conforms to the user's usage habits. By selecting the device configuration item, the smart device is configured according to the user's voluntary choice, making the device configuration more suitable for the user's needs and improving the user experience.

The terminal device 11 can, but is not limited to, various smart control panels, personal computers, laptops, smartphones, tablet devices, and portable wearable devices, etc. The smart devices can be smart home devices, for example, smart home devices can include lights, TVs, and air conditioners. Furthermore, smart home devices can also include smart door locks, speakers, robotic vacuum cleaners, sockets, body fat scales, table lamps, air purifiers, refrigerators, washing machines, water heaters, microwave ovens, rice cookers, curtains, fans, TVs, set-top boxes, doors, and windows, etc.

Additionally, the system for configuration smart devices can also include a server 13. Server 13 can receive data sent by smart devices and/or terminal device 11 and can be implemented using a standalone server or a server cluster composed of multiple servers.

The device configuration items can be analyzed and obtained by terminal device 11 or server 13 based on the historical operation data of devices under the target space.

Furthermore, for the smart home system, a voice device can also be included, which is used for voice interaction with the user, thereby controlling the smart devices based on the received voice commands.

The voice device can be terminal device 11, or it can be a separate interactive device with voice interaction capabilities, such as a smart control panel with voice interaction features.

Below is a detailed description of the technical solution of the present application through a specific embodiment.

Please refer to FIG. 2, which is a flow diagram of a device configuration method provided in an embodiment of the present application. The method provided in this embodiment is executed by a terminal device, which can be the terminal device 11 shown in the aforementioned FIG. 1, or it can also be a control device with control functions such as a smart control panel. The method provided in this embodiment can be applied to an Internet of Things (IoT) system, which can be the system shown in the aforementioned FIG. 1.

The following explanation takes the IoT system as a smart home system and the terminal device as the terminal device 11 shown in FIG. 1 as an example. The method provided in this embodiment can include the following steps 21-23:
Step 21: when obtaining device configuration recommendation information for a device under a target space, pushing and displaying the device configuration recommendation information.

Wherein, the target space is the real space where the devices in the IoT system are located. For example, when a smart home system is installed in a residence, the smart devices within the residence can be connected to the smart home system, and the residence is the target space. Devices under the target space can be smart devices that the terminal device can control, such as the smart devices shown in FIG. 1.

The device configuration recommendation information can refer to suggestions for configuration smart devices. This information is analyzed and obtained by the terminal device or server based on historical device operation data. It can be understood that the device configuration recommendation information is automatically generated and can serve as a reference for users configuration smart devices.

The device configuration recommendation information is derived from the analysis of historical device operation data. It can be understood that historical device operation data refers to the operational data of various smart devices over a period of time, which can be specifically obtained through the operation logs of the respective smart devices.

The terminal device obtains the device configuration recommendation information for the smart devices in the smart home system and pushes and displays this information. For example, the device configuration recommendation information can be displayed on the screen of the terminal device, or it can be shown on the interface of an application running on the terminal device, allowing users to view the device configuration recommendation information.

Step 22: responding to a selection operation for at least one device configuration item in the device configuration recommendation information, displaying device control information corresponding to a selected target device configuration item.

Wherein, the device configuration recommendation information includes at least one device configuration item. A device configuration item refers to configuration information regarding various attributes of a smart device, enabling users to understand what settings can be applied to that smart device.

When there are multiple device configuration items, all device configuration items can be displayed in the form of a list or stack, and the present application does not limit the display form of the device configuration items.

The selection operation can take various forms, such as a click operation or a voice command, for example, a voice input saying "I want to view the first device configuration item" or "Display the first device configuration item," and the present application does not limit this to specific forms.

The device control information refers to the control information recommended for setting on the smart device.

For example, the device control information can include the target device and the target control operation and target execution time for the target device. The target control operation for the smart device can be to turn on, adjust, or turn off the smart device, etc. For instance, when the smart device is an intelligent curtain, the control operation for the smart device can be to open the intelligent curtain by 50%, fully open the intelligent curtain, or close the intelligent curtain, etc.

The terminal device, based on the received selection operation for at least one device configuration item in the device configuration recommendation information, displays the control information for the selected target device configuration item corresponding to the target device.

Step 23: responding to a configuration operation for the selected target device configuration item, performing configuration processing on the corresponding device based on a target device configuration item, to apply the target device configuration item.

Wherein, the configuration operation can include modifying, deleting, or confirming the target device configuration item.

The terminal device responds to a configuration operation for the selected target device configuration item by performing a confirmation operation on at least one of the device configuration items for the smart device, and configures the smart device corresponding to the target device configuration item based on the target device configuration item.

After receiving a configuration operation from the user for the target device configuration item, the terminal device configures the corresponding target device according to the user-confirmed target device configuration item. For example, the terminal device applies the control operation and its execution parameters from the target device configuration item to the target device. For instance, when the control operation in the target device configuration item is to open the curtains and the execution time is set for 7 AM daily, then the curtains are configured to open automatically at 7 AM every day.

Wherein, the target device configuration item can be one or more of the device configuration items for the smart device.

In this embodiment, when the terminal device obtains configuration recommendation information for devices under the target space, which is based on the analysis of historical device operation data, then it pushes and displays the device configuration recommendation information, allowing users to promptly see that there are new configuration recommendations. The terminal device responds to a selection operation for at least one device configuration item in the device configuration recommendation information by displaying the device control information corresponding to the selected target device configuration item, enabling users to view, modify, and confirm the device control information corresponding to the selected target device configuration item through configuration operations. Responding to a configuration operation for the selected target device configuration item, the terminal device configures the corresponding device based on the target device configuration item to apply the target device configuration item. The configuration recommendation information, which is derived from the analysis of historical device operation data, can effectively mine users' needs for automated command configuration, making the device configuration items more in line with users' usage habits. By configuration smart devices based on user choices and allowing users to voluntarily configure smart devices, the device configuration is more tailored to user needs, enhancing the fit between automated services and users' actual lives.

Additionally, this saves the time users would spend on their own configuration, making the device configuration more aligned with the actual usage situations of the users. Furthermore, while users would need to answer quiz questions during self-configuration, the method in this embodiment already provides device configuration items as a reference for user configuration, allowing users to directly determine whether to execute them. Therefore, the method in this embodiment transforms quiz questions into judgment questions, significantly reducing the difficulty of configuration automated commands and improving the user experience.

In some embodiments, based on the embodiment shown in FIG. 2, step 21 can further include the following steps:
Step 211: when obtaining the device configuration recommendation information for the device under the target space, pushing and displaying a recommendation configuration prompt information corresponding to the device configuration recommendation information.

Wherein, the recommendation configuration prompt information is configured to prompt users to view the device configuration recommendation information. For example, it can display the number of device configuration items included in the device configuration recommendation information without including the specific device configuration items. For instance, the recommendation configuration prompt information could display: "You have 3 new configuration suggestions" or "Please view out the 2 automation suggestions generated for you," etc.

The recommendation configuration prompt information can take various forms. For example, it can be displayed as a scrolling notification or in the form of a dialog box.

The terminal device can push the recommendation configuration prompt information in various ways. For instance, the terminal device can push the recommendation configuration prompt information in areas such as system notifications, or during the operation of an application, on the displayed application interface.

The application interface is the display interface when the application is running, which can be the home page of the application or other pages within the application.

Furthermore, the recommendation configuration prompt information can also be configured to display other notification messages of the application. When displaying other notification messages of the application, the prompt messages for configuration suggestions and other notification messages can be displayed in a scrolling loop.

Step 212: responding to a selection operation received for the recommendation configuration prompt information, displaying the device configuration recommendation information.

When the user wishes to view the recommendation message, they can select the recommendation configuration prompt information, thereby causing the terminal device to display the device configuration items that the user has not yet viewed, based on the received selection operation.

The selection operation on the recommendation configuration prompt information can take various forms. For example, it can be a click operation on the recommendation configuration prompt information, or a voice command such as "I want to view configuration suggestions" or "Display configuration suggestions," and this application does not limit these forms.

In this embodiment, the terminal device, upon obtaining the device configuration recommendation information for devices under the target space, can push the recommendation configuration prompt information. The terminal device displays the device configuration recommendation information based on the user's selection operation for the recommendation configuration prompt information, thereby promptly alerting the user to view new device configuration recommendation information and enhancing the user experience.

Furthermore, step 211 can be implemented through the following steps:
responding to an application launch command, launching the application and displaying the recommendation configuration prompt information on the home page of the application.

The home page of the application is the first interactive interface displayed after the application is launched.

After the application in the terminal device is launched, the recommendation configuration prompt information is displayed on the home page, allowing users to immediately learn about a new device configuration item.

Optionally, when the processor is located on the server, that is, when the device configuration recommendation information is generated by the server, then after the application is launched, the terminal device obtains the latest device configuration items from the server and generates recommendation configuration prompt information based on the obtained device configuration items.

In this embodiment, after the application is launched, the terminal device displays recommendation configuration prompt information on the home page of the application. After the user opens the application, regardless of the operation they wish to perform, they can first pay attention to the content prompted in the recommendation configuration prompt information, allowing the user to promptly view the corresponding device configuration items and serving as an effective guidance.

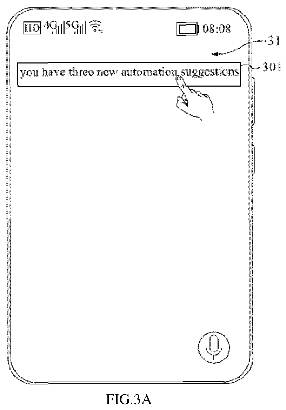

Below, FIGS. 3A-3D are used as examples to illustrate the method provided in this embodiment of the application. It is understood that FIGS. 3A-3D are merely one specific form of implementation exemplarily shown for the purpose of illustrating the method provided in this embodiment of the application, and they do not constitute a limitation on this application. The automation suggestions in FIGS. 3A-3D correspond to the configuration suggestions in this application.

Please refer to FIG. 3A, which is a schematic diagram of an application interface provided in this embodiment of the application. The application interface 31 includes recommendation configuration prompt information 301.

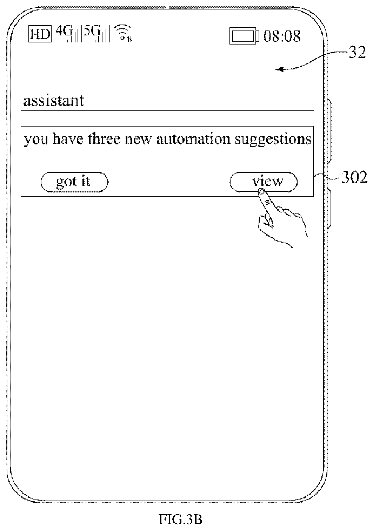

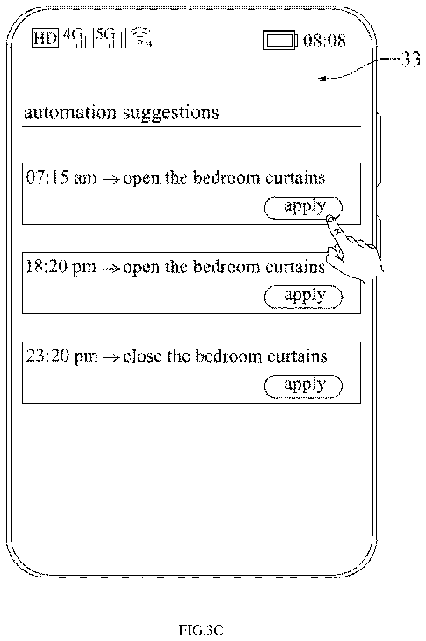

The user can click on the recommendation configuration prompt information 301, and the interface will switch from interface 31 to the interface 32 shown in FIG. 3B. Please refer to FIG. 3B, which is a schematic diagram of a notification message display interface provided in this embodiment of the application. Interface 32 can be a display interface for all notification messages of the application, which can be displayed in a list form (other notification messages are not shown in FIG. 3B), including an interactive control 302 for the recommendation configuration prompt information 301. In 302, the user clicks "Got it," and the recommendation suggestion prompt information for those three device configuration items will no longer be displayed. When the user clicks "View," interface 32 can switch to interface 33 shown in FIG. 3C.

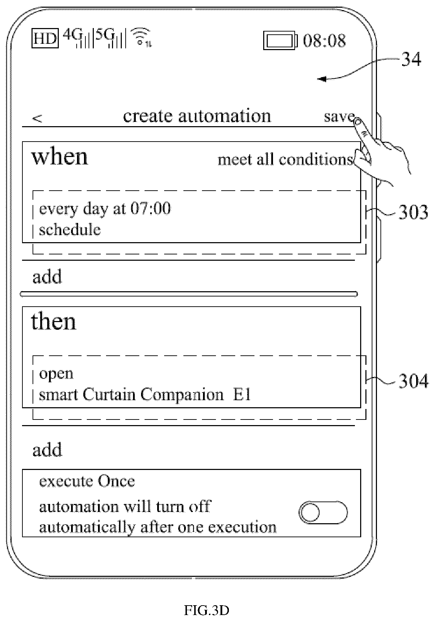

Please refer to FIG. 3C, which is a schematic diagram of a device configuration item list provided in this embodiment of the application. Interface 33 can display the content of specific device configuration items in a list form. The user clicks "Apply" corresponding to the device configuration item, and the interface will switch from interface 33 to interface 34 shown in FIG. 3D.

Please refer to FIG. 3D, which is a schematic diagram of a device configuration item configuration interface provided in this embodiment of the application. Interface 34 displays the specific implementation form of the device configuration item. Interface 34 can be similar to the interface for creating a new device configuration item, except that the control operation 304 and the control operation execution time 303 have already been pre-filled according to the device configuration item. The user can click "Save" to save the corresponding device configuration item, thereby configuration the corresponding smart device based on the save confirmation operation.

In some scenes, the terminal device can also be a device with voice interaction capabilities, such as a smart control panel with voice interaction capabilities. Below is an illustration using a smart control panel as the terminal device. During the operation of the smart home system, users can control or manage smart devices through a smart home application installed on their mobile phone, or through voice interaction with a smart control panel. Users usually prefer to control smart devices using the smart control panel for simple control processes, reducing the number of times they open the application. Therefore, after a new device configuration item is generated, when the user has not opened the application but interacts with the smart control panel through voice, the recommendation configuration prompt information can be output through the smart control panel. Specific examples are provided below.

Based on the embodiment shown in FIG. 2, further, before step 21, the following steps can also be included:

after completing a voice interaction, detecting whether there are any device configuration items that not been viewed currently.

If so, output a voice prompt message.

The voice device determines that there are device configuration items that the user has not viewed in the application currently and outputs a voice prompt message.

Wherein, voice interaction is the interaction process between the user and the voice device. For example, it can be the user waking up the voice device and asking the voice device to turn on the TV.

The voice prompt information is configured to remind users to view the device configuration items. The voice prompt information can take various forms, for example, it can be "Please view the new configuration suggestions in the APP" or "You have new configuration suggestions, please view them in the APP promptly," etc.

In this embodiment, after the terminal device completes a voice interaction, it determines whether there are any device configuration items that the user has not viewed currently. When there are, it outputs voice prompt information. When not, it continues with the original processing procedure. This allows the terminal device to promptly remind the user through the terminal device even when the user does not frequently open the terminal device. Additionally, the voice prompt information is output after the voice device completes a control interaction, ensuring that the user control interaction proceeds normally while also reminding the user to view new device configuration items promptly, thereby enhancing the user experience.

In some embodiments, step 23 can include the following steps 231 and 232:

Step 231: responding to a selection operation for the device configuration item, display a configuration interface corresponding to the device configuration item.

Wherein, the configuration interface corresponding to the device configuration item includes the control operations of the device configuration item and the execution parameters of the control operations.

Optionally, the execution parameters of the control operations can be the execution time and/or execution frequency of the control operations.

For example, the interface 34 shown in FIG. 3D is a configuration interface. The configuration interface can also include other information for setting up smart devices. In the interface 34 shown in FIG. 3D, it also includes whether this device configuration item is executed once, that is, it can set the device configuration item to execute only once or every day, etc.

Step 232: receiving a confirmation operation on the configuration interface for the device configuration item.

In this embodiment, by displaying a detailed configuration interface through the terminal device, the content of the device configuration item can be more detailed, and users can understand the device configuration item in a simple and clear manner.

In some scenes, the content in the configuration interface can be updated by the user, so that the user can modify, delete, and other update operations based on their actual situation, to obtain a configuration that is more in line with their own habits. Specific examples are provided below.

Furthermore, step 23 can include the following steps:
Step 23a: receiving an update operation for the selected target device configuration item, and updating the device configuration item according to the update operation.

Step 23b: responding to a confirmation operation for an updated selected target device configuration item, performing configuration processing on the corresponding device based on the target device configuration item.

Taking the interface 34 shown in FIG.3D as an example, the control operation 304 and the control operation execution parameters 303 in the configuration interface can be modified. Users can click on the control operation 304 and/or the control operation execution parameters 303 shown in interface 34 to modify them. Thus, when the user clicks "Save," that is, when a confirmation operation is received, the device is configured with the modified device configuration item.

In this embodiment, the terminal device dynamically learns from user feedback on device configuration items and recent user behavior habits of smart devices, adjusts smart home configuration recommendation items to adapt to changes in user living habits or new needs due to changes in household members, making device configuration items more in line with user needs, and achieving a true smart butler service.

In some scenes, the current methods for creating automated instructions in smart home scenes are mostly based on the user's subjective intentions, and users manually configure them. The device configuration method provided in this embodiment is based on automated instruction generation from the control logs of smart devices, changing manual creation to automatic recommendation, and changing configuration based on subjective ideas to configuration based on customer user usage data. A specific example is provided below to illustrate a method for generating device configuration items.

In some embodiments, configuration suggestion items can be generated by the terminal device or by the server. The following provides a detailed explanation using the server-generated configuration suggestion items as an example.

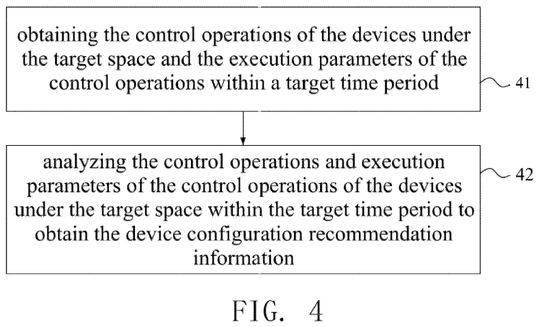

Please refer to FIG.4, which is a flow diagram of a method for generating device configuration items provided in an embodiment of the present application. The method provided in this embodiment is executed by the terminal device or the server. The following provides a detailed explanation using the processor as the server's processor. The method provided in this embodiment includes the following steps 41 and 42:
Step 41: obtaining the control operations of the devices under the target space and the execution parameters of the control operations within a target time period.

Wherein, the target time period is a pre-set time length, which can be 7 days, 14 days, or other time lengths, and this application does not limit this.

Wherein, the control operations of the devices under the target space and the execution parameters of the control operations within the target time period can be sent to the server by the smart devices, or they can be sent to the server by the terminal devices.

Optionally, the server can obtain the user's usage data of the smart devices within the preset time period at a preset cycle. The server can also obtain the user's usage data of the smart devices in real-time, and obtain the usage data within the preset time period from the real-time obtained user's usage data of the smart devices.

Step 42: analyzing the control operations and execution parameters of the control operations of the devices under the target space within the target time period to obtain the device configuration recommendation information.

The server analyzes and processes the control operations and execution parameters of the control operations of each device under the target space within the target time period, determines whether the control operations and execution parameters of the control operations have stable regularity, and when they have stable regularity, generates device configuration recommendation information based on the control operations and execution parameters of the control operations.

Optionally, step 42 can be implemented in the following manner:

Step 421: For each control operation of the devices under the target space within the target time period, determining whether execution frequency of a control operation within the target time period is greater than or equal to the frequency threshold.

When so, it can be considered that the execution frequency of the target operation is relatively high, and then proceed to step 422. When not, do not proceed to the next processing for this control operation, but return to execute step 421, that is, continue to determine whether the execution frequency of the next control operation within the target time period is greater than or equal to the frequency threshold.

Wherein, the frequency threshold is pre-set and is associated with the target time period and the control operation. That is, each control operation can have a corresponding frequency threshold, and the frequency threshold is set based on the length of the preset time period.

Optionally, the execution frequency can include the number of executions.

For example, when the target time period is 7 days, the frequency threshold can be set to 5 or 6, etc. When the target time period is 15 days, the frequency threshold can be 10 or 12, etc.

Step 422: determining the control operation as a pending analysis control operation.

Step 423: analyzing execution parameters of pending analysis control operations, to obtain a target control operation and a target execution time corresponding to the target control operation.

The server analyzes the execution times of the pending analysis control operations. For example, based on the execution parameters of the pending analysis control operation, a time series can be obtained, and the stability of the time series can be analyzed to obtain the target control operation and the target execution time corresponding to the target control operation.

Optionally, the execution parameters include execution times, and step 423 can include the following steps:
Step 4231: obtaining expected time of the execution times of the pending analysis control operations.

The server can determine the time mode to which the pending analysis control operation belongs based on the execution time and various time patterns, and obtain the expected execution time of the pending analysis control operation within the time mode.

The time patterns can include but are not limited to: workday mode, weekend mode, and daily mode, etc.

The expected time refers to the predicted time based on the execution time, for example, it can be the average of all execution times.

Step 4232: obtaining the differences between expected time and the execution times of all the pending analysis control operations.

Step 4233: determining whether the number of differences less than the preset time difference accounts for a proportion greater than or equal to a preset proportion threshold of the total number of differences.

When so, proceed to step 4234. When not, return to execute step 421.

Step 4234: determining the pending analysis control operations as the target control operation, and determining the expected time of the execution times of the pending analysis control operations as target execution time corresponding to the target control operation.

Step 424: obtaining the device configuration recommendation information based on the target control operation and the target execution time corresponding to the target control operation.

It can be understood that the device configuration recommendation information in the above embodiment can be obtained through the method provided in this embodiment.

In this embodiment, by generating device configuration recommendation information based on the user's usage data within a preset time period using the server, the device configuration recommendation information is generated based on the user's usage data within the preset time period, which can effectively mine the user's needs for automated command configuration. The device configuration recommendation information is more in line with the user's usage habits. Thus, the terminal device displays an application interface that includes recommendation configuration prompt information, responds to a selection operation on the recommendation configuration prompt information by displaying at least one device configuration recommendation information for the smart device; responds to a confirmation operation on the target device configuration recommendation information in at least one device configuration recommendation information for the smart device, and configures the smart device based on the user's choice, configures the smart device based on the user's voluntary choice, making the smart device configuration more suitable for the user's needs, improving the fit between automated services and the user's actual life. In addition, it saves the user's time for self-configuration, making the smart device configuration more in line with the user's actual usage situation. Furthermore, when the user self-configures, they need to answer quiz questions, but the method in this embodiment has already provided matching suggestion items, and the user can directly determine whether to execute them. Therefore, the method in this embodiment turns quiz questions into judgment questions, significantly reducing the difficulty of configuration automated commands and improving the user experience.

Furthermore, after the terminal device sends a configuration suggestion request message, the server can send device configuration items to the terminal device, or it can also send device configuration items to the terminal device at a preset cycle.

The server obtains high-frequency control operation execution time data within the target time period (which can be the last week or half a month), and analyzes the control operation execution time data from different dimensions in combination with reasonable work and rest patterns, analyzes the regularity and stability of the control operation execution time data. When there is a certain rule in the execution time and the number of executions of the control operation, then the expected value (forecast value) of the execution time is determined, thereby generating automated command configuration suggestion items. After the terminal device makes a request, the configuration suggestion items can be pushed to the terminal device, and the corresponding settings can be made based on the user's operations on the configuration suggestion items.

In some other embodiments, the predictive recommendation function can also be provided from another dimension by collecting historical device data within a preset period, analyzing the stability of the device status values of the historical device data, analyzing whether there is control information that meets the preference adjustment conditions during the corresponding period, calculating the expected (forecast) value of the device status values, using the expected values of each device to match the subsequent device reported data, extracting matching periods; smoothing the data for the matching periods, generating the user's habit preferences and corresponding device control preferences. Below is a detailed explanation with a specific example.

Based on the above embodiment, further, the device configuration recommendation information can also be obtained in the following way:
obtaining user habit data within the target time period;
by analyzing correlation between the user habit data and the control operations of the devices under the target space and the execution parameters of the control operations within the target time period, determining the device configuration recommendation information corresponding to the user habit data.

Wherein, user habit data refers to data that reflects the user's work and rest habits, which can be obtained with the user's permission, for example, user habit data can include user sleep data.

The server analyzes the control preferences of the smart devices corresponding to the user's sleep state, such as the user's control preferences when entering a sleep state and when waking up, and then generates corresponding device configuration items.

For example, the specific method for creating automated instructions is as follows:

First, collecting bedroom device data (mainly control and human sensing types) from 1:00 to 5:00 in the effective period (which can be the last week or half a month); then perform stability analysis of the device status values: whether there is a clear preference for the status values during this period; when there is a pattern, calculate the expected (forecast) value of the device status values;

Using the expected values of each device to compare the device reported data from 21:00 to 12:00 (the next day), extracting matching periods; smoothing the data for the periods (for example, periods less than 10 minutes can be removed, regarded as getting up to use the bathroom; data that deviates significantly from the overall trend can be removed, not included in the daily routine);

Analyzing the wake-up times and sleep times indicated by the sleep period within the validity period for dispersion; wherein data with low dispersion can generate user preferences for wake-up times and sleep times, thus, provide an automated control solution that matches the user's sleep habit preferences.

In some embodiments, in addition to the methods introduced above, the device configuration recommendation information can also be obtained by analyzing the correlation of events or other third-party parameters to determine whether the control operation is the target control operation.

Wherein, the correlation of events is configured to illustrate the relationship between executing different control operations. For example, when the user turns on the light when they come home at 7 o'clock every day, and then turns on the audio-visual equipment after 5 minutes, the light turning on and the audio-visual equipment turning on can be considered related events.

Wherein, other third-party parameters can be data other than the operations performed on the smart devices, for example, they can be the aforementioned user habit data.

Optionally, based on the method and temporal correlations or other third-party parameters described in the aforementioned embodiments, it is possible to determine whether the convergence direction of the timing is reasonable and whether it has reached an appropriate level, thereby obtaining a more suitable expected time.

In some other embodiments, the method for obtaining device configuration recommendation information, in addition to the methods introduced above, can also be based on the device configuration items set by multiple users for push.

For example, when users with similar work and rest schedules own the same device, an analysis can be conducted on the device configuration items that are used relatively frequently. Thereby, the relatively frequent content can be recommended to users with similar work and rest schedules, completing collaborative recommendations.

In some scenes, the control behavior of different devices varies due to differences in execution time and execution parameter sensitivity. Therefore, the initial feature set selection and the subsequent features confirmed through data analysis will be different. The model will periodically learn data from the most recent specified time period and output the latest recommendation content.

Below is an example illustrating the method provided in this embodiment of the application, taking the opening and closing operation of curtain devices as an example. In this example, the control operation is also referred to as an operational event. This example includes the following steps a to d:

Step a: determining the analysis target for the curtain device.

It is necessary to determine the recommendation timing, which corresponds to the execution time of the control operation in the aforementioned embodiment, to locate the timing rule of the automated execution of the event. Determine the recommendation event indicator threshold, which corresponds to the frequency threshold in the aforementioned embodiment, and verify the accuracy and recall rate of the following dimensions to locate the control operations that are recommended for automation.

Furthermore, in the process of data analysis for usage, it can be analyzed separately for natural days and working days. This is to determine whether the user meets the preference convergence requirements based on natural days. When not satisfied, it can be judged again from working days. When selecting the most recent behavioral data for preference calculation, it will also be differentiated according to natural days and working days, that is, whether to skip holiday data. The following judgment conditions can be but are not limited to:
The number of occurrences in the last 15 natural days is >= 10 days
The number of occurrences in the last 15 working days is >= 10 days
The number of occurrences in the last 10 natural days is >= 7 natural days
The number of occurrences in the last 10 working days is >= 7 working days
The number of occurrences in the last 5 working days is = 5 working days

Meeting any one of the conditions can participate in automated recommendations.

Furthermore, when the conditions are met, the natural day model can be selected.

Step b: determining the thresholds corresponding to different control operations and determining whether the operational events have regularity.

The opening and closing degree operation of the curtain can be divided into fully open (90%~100%), fully closed (0%~5%), and half-open (5%~90%) events, and the whole day is divided into 8 time periods. Record the number of occurrences of the curtain fully closed, fully open, and half-open events in each time period, as well as the average occurrence time points, to locate the past occurrence day number indicator threshold that can be recommended for automation of control operations.

Step c: verifying the above rules.

Select devices with operational actions in all 8 time periods of 8/23 as the verification object to verify the accuracy and recall rate of the predicted actual fully open, fully closed, and half-open operational devices in each time period under different occurrence day number thresholds. The model is static, and the analysis and generation process is the calculation process. Periodically calculate and output the latest automated recommendation results based on the behavioral data of the specified duration in the past. For example, analyze and calculate the data of the past 15 days every Monday to generate recommendation content.

Step d: generating the configuration recommendation items.

Analyze the above data, and the following conclusions are drawn:

The accuracy and recall rate of the working day dimension are relatively high; the recall rate and recommendation quantity under the threshold of 15 working days >= 10 days are relatively high compared to other thresholds, so this threshold can be chosen. 63% of the devices with recommended time and actual operation time difference within 30 minutes under the threshold of 15 working days >= 10 days are within the acceptable range.

Thereby, the features selected after analysis and verification with different data samples are:
Features related to device control action reasoning: the number of occurrence days of curtain operation events (fully closed, fully open, and half-open) in 15 working days for each time period;
Features related to execution timing reasoning: the average occurrence time points of curtain operation events (fully closed, fully open, and half-open) in 15 working days for each time period;
Features related to device execution opening and closing degree reasoning: the average opening and closing degree of half-open events in 15 working days for each time period.

That is, it can include the target smart device, the target operational event, the execution time of the target operational event, and the target value of the target operational event. Since it is carried out independently for each device, there is no process of selecting the target smart device. Instead, all devices participate in the analysis, and smart devices that meet the preset conditions will generate automated recommendation content, that is, generate configuration recommendation items.

Case: After user A has used the curtain motor for 15 days, the curtain has been opened at around 7 a.m. for 13 days and closed at around 11 p.m. for 12 days. Two device configuration items are generated after 15 days:
device configuration item one: open the curtain to 100% at 7 a.m.;
device configuration item two: close the curtain to 0% at 11 p.m.;
When the user accepts device configuration item one and does not accept device configuration item two. A week later, because the manual operation triggered by the automatic opening at 7 a.m. does not meet the threshold, but the manual operation at 11 p.m. in the last 15 days still meets the recommendation conditions. Therefore, one device configuration item is generated in the second week:
device configuration item three: close the curtain to 0% at 11 p.m.;
In this way, new device configuration items are calculated and generated periodically.

In this application scenario, as users' living habits change or the composition of residents changes, the technology can dynamically learn from behavior habits and user feedback, gradually adjust the automation services of smart homes to adapt to new demands, achieving a true smart butler service. It applies artificial intelligence data in home automation but allows for manual intervention and adjustment in the process, avoiding the technical application risks brought by excessive intelligence. The terminal device, based on the user's actual control data, can effectively mine the user's automated command configuration needs, improve the fit between automated services and the user's actual life, and thereby optimize the user experience.

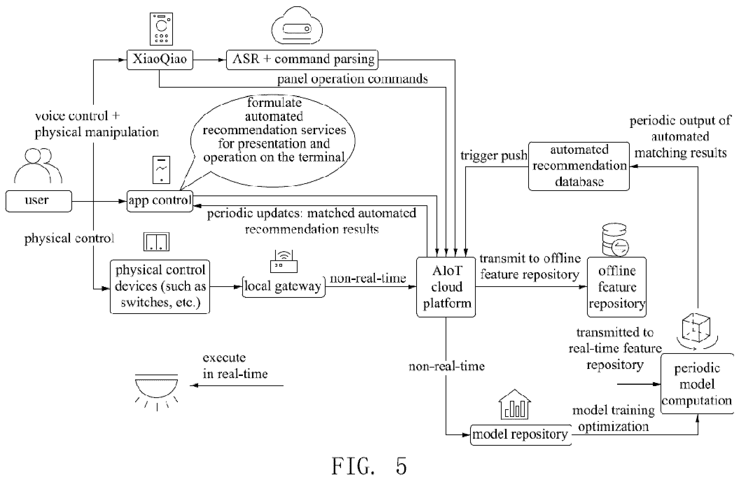

Below is an example introducing a method for generating device configuration items provided in this embodiment of the application, as shown in the system data flow diagram of FIG. 5.

Please refer to FIG. 5, where users can interact with the smart control panel (referred to as "XiaoQiao" in FIG. 5) through voice commands, and can also physically control smart devices through applications installed on terminal devices, or directly control smart devices (e.g., by switches, remote controls, or other physical control devices of the smart device). The aforementioned multiple control methods all provide real-time control over smart devices, with FIG. 5 illustratively showing smart devices as lamps. The smart control panel, terminal devices, and direct physical control devices of various smart devices are connected to the Artificial Intelligence & Internet of Things (AI+IoT, abbreviated as AIOT) cloud platform through a local gateway, which can be specifically implemented by the aforementioned server. This completes the collection and summarization of smart device data through data reporting from multiple ends. The specifics are as follows: voice interaction panel end: user voice control data on the voice interaction panel will be recognized and parsed into control instruction information through automatic speech recognition technology (Automatic Speech Recognition, abbreviated as ASR) in the AI cloud, and synchronized to the AIOT cloud platform in real-time; direct panel operation information will also be uploaded to the AIOT cloud platform in real-time. Terminal device application end: manual operation data (non-automated execution) is directly synchronized to the AIOT cloud platform in real-time. Smart device end: direct physical control data of smart devices in the space are stored in the local gateway in real-time, and status data will be regularly or triggered to be reported to the gateway, and the local gateway will periodically report to the AIOT cloud platform.

The AIOT cloud platform can include: an automation recommendation database, an offline feature repository, and a model repository.

Among them, the model repository can include one or more reasoning models. By intervening in the historical usage data of smart devices by users or by training models, reasoning models of different types of automated configurations are formed. The model repository can be continuously iterated and optimized in combination with the verification of new user usage data of smart devices. The model repository can train models, and the preliminary work of model training includes feature selection. Feature selection, also known as feature subset selection or attribute selection, refers to the process of selecting N features from the existing M features to optimize specific indicators of the system, which is the process of selecting some of the most effective features from the original features to reduce the dimension of the dataset. It is an important means to improve the performance of learning algorithms and a key data preprocessing step in pattern recognition.

The offline feature repository is configured to generate features, which correspond to the device configuration items in the aforementioned embodiments. The AIOT cloud platform can receive usage data reported by multiple users' smart devices through data collection and reporting paths, and the AIOT cloud platform cleans and processes the reported user usage data to generate non-real-time feature data, stored in the feature repository.

Used for reasoning calculations of automated recommendation content based on historical device operation data. Non-real-time features can be generated based on usage data from the most recent preset period within the update cycle (e.g., 15 working days or natural days). For example, when the recommendation model is set to update once a week, then the data from the most recent 15 days will be used for feature generation and model calculation, where weekly and 15 days are configurable parameters that can be adjusted based on actual test results.

The automation recommendation database is configured to generate and store device configuration items. The automation recommendation database generates automated recommendation-related device configuration items based on historical device operation data and stores them in the automation recommendation database. The content of historically stored device configuration items will be refreshed with new device configuration items, and when the terminal device issues a request, the AIOT cloud platform will push the verified device configuration items to the terminal device, enabling the terminal device to provide recommendation prompts and displays.

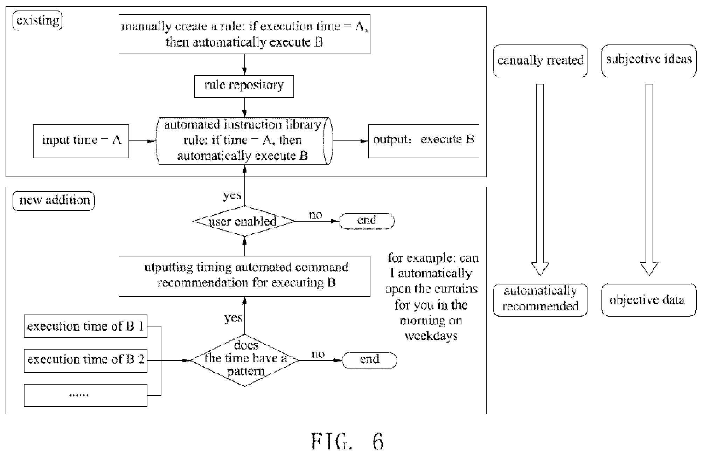

Below is an illustration of the effect of the method provided in this embodiment of the application, as shown in the difference diagram between the device configuration method provided in this embodiment and existing technology, as shown in FIG. 6.

Please refer to FIG. 6, as shown in the figure above, the process displayed in the upper left box labeled "Existing" is the current method of creating device configuration recommendation information in smart home scenes, which is based on the user's subjective intent to manually create automated commands, for example, when the execution time is A, then set to automatically execute control operation B. The manually set rule is stored in the database, and control operation B is automatically executed when time A is met.

The process displayed in the upper left box labeled "New" is the new process steps added by the device configuration method proposed in this application on the basis of the existing method. The specific method of this application can be as follows:
1. Firstly, obtaining the execution time data of high-frequency control behaviors (B) within the target time period (which can be the last week or half a month). FIG. 6 illustratively shows the execution time 1 of B, the execution time 2 of B, etc.
2. Determining whether the execution time data of B has a pattern.
   Features can be developed from different dimensions in conjunction with reasonable work and rest patterns to analyze the regularity and stability of the execution time data. When not, the determination ends; when so, proceed to step 3 below.
3. Calculating and outputting the timing automated command recommendation for executing B. That is, calculate the expected value (forecast value) of the execution time of B. Wherein, this timing automated command recommendation is the device configuration item in the aforementioned embodiments.
4. Generating the device configuration items and pushing them on terminal devices.
5. Determining whether the device configuration item is enabled by the user.
   if so, it can be applied to the target device; if not, it will not be applied to the target device.

Users can directly confirm or modify and confirm, then directly add the device configuration item to the user's automated command library.

As can be seen from FIG. 6, the existing manual creation method requires users to set up on their own, increasing the difficulty of user setup, and based on the user's subjective ideas for setup, sometimes it cannot truly and comprehensively reflect user habits. The device configuration method provided in this application changes the existing user manual creation method to an automatic recommendation method, eliminating the need for users to configure subjectively, reducing the configuration difficulty, and the existing method is based on user subjective ideas for configuration, while this application is based on customer data for objective configuration, improving the accuracy of the configuration items and better meeting user habits.

It should be understood that although the various steps in the flowcharts of the aforementioned embodiments are sequentially displayed according to the arrows, these steps are not necessarily executed in the order indicated by the arrows. Unless explicitly stated in this document, there is no strict order restriction on the execution of these steps, and these steps can be executed in other orders. Moreover, at least some of the steps in the aforementioned embodiments can include multiple steps or stages, and these steps or stages are not necessarily executed at the same time, but can be executed at different times. The execution order of these steps or stages is not necessarily sequential, but can be executed in rotation or alternation with at least some of the other steps or stages in other steps.

In one embodiment, a system for configuration devices is provided, which includes:
a terminal device, configured to display an application interface that includes recommendation configuration prompt information, wherein the recommendation configuration prompt information is configured to prompt users to view suggestions for device configuration; respond to receive selection operations for the recommendation configuration prompt information, control a display module to display at least one device configuration item for a smart device; respond to a confirmation operation for at least one target device configuration item in the device configuration items of the smart device, configure the smart device corresponding to the target device configuration item based on the target device configuration item;
a server, configured to obtain a usage data of the smart device by a user within a preset time period, generate device configuration items based on the usage data of the smart device by the user within the preset time period, each device configuration item including recommended control operations for the smart device and times for executing the control operations.

Optionally, the terminal device is also configured to receive a update operation for the selected target device configuration item, update the device configuration item based on the update operation; responsive to a confirmation operation on the updated selected target device configuration item, configuration the corresponding device based on the target device configuration item.

Optionally, the historical device operation data includes control operations of devices under the target space and execution parameters of the control operations within the target time period; the terminal device is also configured to analyze and process the control operations and execution parameters of the control operations of each device under the target space within the target time period, to obtain device configuration recommendation information.

Optionally, the terminal device is also configured to, for each device under the target space within the target time period, when the execution frequency of the control operation within the target time period is greater than or equal to the frequency threshold, determine the control operation as the pending analysis control operation; analyze the execution parameters of the pending analysis control operation, to obtain the target control operation and the target execution time corresponding to the target control operation; based on the target control operation and the target execution time corresponding to the target control operation, obtain the device configuration recommendation information.

Optionally, the terminal device is also configured to obtain the expected time of execution times of the pending analysis control operations; obtain the differences between the expected time and the execution times of all the pending analysis control operations; when the number of differences less than a preset time difference accounts for a proportion greater than or equal to a preset proportion threshold of the total number of differences, determine the pending analysis control operation as the target control operation, and determine the expected time of the execution times of pending analysis control operations as target execution time corresponding to the target control operation.

Optionally, the terminal device is also configured to obtain a user habit data within the target time period; by analyzing the correlation between the user habit data and the control operations of devices under the target space and the execution parameters of the control operations within the target time period, determine the device configuration recommendation information corresponding to the user habit data.

Optionally, the terminal device displays the recommendation configuration prompt information on the application interface, including: the terminal device responding to the application startup command, starting the application, and displaying the recommendation configuration prompt information on the home page of the application.

Optionally, the terminal device is also configured to, after completing a control interaction, determine when there are any device configuration items that the user has not viewed in the application currently, output voice prompt information, the voice prompt information is configured to prompt the user to view suggestions for device configuration.

Optionally, after the terminal device displays at least one device configuration item for smart devices, it also includes: the terminal device responds to selection operations on the device configuration items, displays the configuration interface corresponding to the device configuration items; the terminal device receives a update operation on the control operations and/or execution times of the control operations in the configuration interface, updates the device configuration item based on the update operation; the terminal device receives a confirmation operation on the device configuration item in the configuration interface.

Optionally, the usage data includes control operations and execution times of the control operations; the server is also configured to generate device configuration items based on the control operations of smart devices by users, execution times of the control operations, and frequency thresholds within the preset time period.

Optionally, the server is also configured to adjust the frequency thresholds based on a update operation.

It can be understood that the system provided in this embodiment has similar implementation principles and technical effects as the system in the aforementioned embodiments.

In one embodiment, a device configuration device is provided, which includes:
a pushing module, configured to push and display device configuration recommendation information when obtaining device configuration recommendation information for a device under a target; wherein the device configuration recommendation information is obtained by analyzing a historical device operation data space;
a display module, configured to respond to a selection operation for at least one device configuration item in the device configuration recommendation information, display device control information corresponding to a selected target device configuration item;
a configuration module, configured to respond to a configuration operation for the selected target device configuration item, performing configuration processing on the corresponding device based on a target device configuration item, to apply the target device configuration item.

Optionally, the device also includes:
a voice interaction module, configured to detect whether there are any unviewed device configuration items currently after completing a voice interaction; when there is an unviewed device configuration item currently, output voice prompt information, wherein the voice prompt information is configured to prompt the user to view the unread device configuration items.

Optionally, the configuration module is specifically configured to:
receive a update operation for the selected target device configuration item, update the device configuration item based on the update operation; responding to a confirmation operation on the updated selected target device configuration item, configure the corresponding device based on the target device configuration item.

Optionally, the historical device operation data includes: control operations of the device under the target space and execution parameters of the control operations within the target time period, the device also includes:
a device configuration recommendation information generation module, configured to analyze and process the control operations and execution parameters of the control operations of each device under the target space within the target time period, to obtain device configuration recommendation information.

Optionally, the device configuration recommendation information generation module is specifically configured to:
for each control operation of each device under the target space within the target time period, when the execution frequency of the control operation within the target time period is greater than or equal to the frequency threshold, determine the control operation as the pending analysis control operation; analyze the execution parameters of the pending analysis control operation, to obtain the target control operation and the target execution time corresponding to the target control operation; based on the target control operation and the target execution time corresponding to the target control operation, obtain the device configuration recommendation information.

Optionally, the device configuration recommendation information generation module is specifically configured to:
obtain the expected execution time of the pending analysis control operation; obtain the differences between the expected time and the execution times of all the pending analysis control operations; when the number of differences less than the preset time difference accounts for a proportion greater than or equal to a preset proportion threshold of the total number of differences, determine the pending analysis control operation as the target control operation, and determine the expected time of the execution times of the pending analysis control operations as the target execution time corresponding to the target control operation.

Optionally, the device configuration recommendation information generation module is also configured to:
obtain a user habit data within the target time period; by analyzing the correlation between the user habit data and the control operations of devices under the target space and the execution parameters of the control operations within the target time period, determine the device configuration recommendation information corresponding to the user habit data.

It should be noted that the device control device provided in the above embodiment is exemplarily illustrated by the division of the above functional modules for device control, and in actual application, the above functions can be allocated to different functional modules as needed, that is, the internal structure of the device control device will be divided into different functional modules to complete all or part of the functions described above.

The device control device provided in the above embodiment and the device control method embodiment belong to the same concept, and the specific manner in which each module performs operations has been described in detail in the method embodiment.

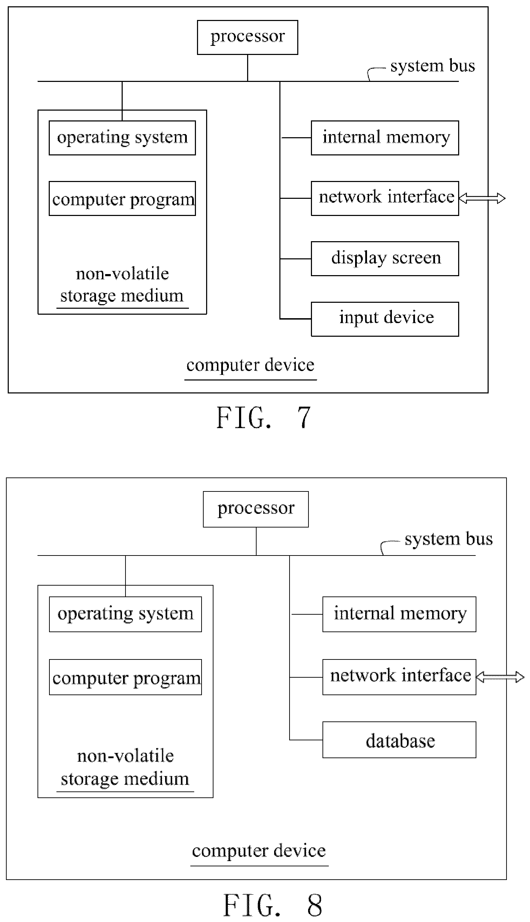

In one embodiment, a computer device is provided, which can be a terminal, and its internal structure can be as shown in FIG. 7. The computer device includes a processor, memory, a network interface, a display, and an input device connected through a system bus. The processor of the computer device is configured to provide computing and control capabilities. The memory of the computer device includes non-volatile storage media and internal memory. The non-volatile storage media stores an operating system and computer-readable instructions. The internal memory provides an environment for the operation of the operating system and computer-readable instructions stored on the non-volatile storage media. The network interface of the computer device is used for network communication with external terminals. The computer-readable instructions, when executed by the processor, implement a method for configuration devices. The display of the computer device can be a liquid crystal display or an electronic paper display, and the input device of the computer device can be a touch layer covering the display, or buttons, a trackball, or a touchpad set on the casing of the computer device, or external keyboards, touchpads, or mice, etc.

In another embodiment, a computer device is provided, which can be a server, and its internal structure can be as shown in FIG. 8. The computer device includes a processor, memory, a network interface, and a database connected through a system bus. The processor of the computer device is configured to provide computing and control capabilities. The memory of the computer device includes non-volatile storage media and internal memory. The non-volatile storage media stores an operating system, computer-readable instructions, and a database. The internal memory provides an environment for the operation of the operating system and computer-readable instructions stored on the non-volatile storage media. The database of the computer device is configured to store usage data and device configuration item data. The network interface of the computer device is used for network communication with external terminals. The computer-readable instructions, when executed by the processor, implement a method for configuration devices.

It is understood by those skilled in the art that the structures shown in FIG.s 7 and 8 are merely block diagrams of parts of the structures related to the present application and do not constitute a limitation on the computer devices to which the present application is applied. The specific computer devices may include more or fewer components than those shown in the FIG.s, or combine certain components, or have different component arrangements.

In one embodiment, a computer device is provided, including at least one processor and at least one memory, wherein the memory stores computer-readable instructions; when the computer-readable instructions are executed by the processor, the electronic device implements the steps of the various method embodiments described above.

In one embodiment, a computer-readable storage medium is provided, on which computer-readable instructions are stored, and when the computer-readable instructions are executed by one or more processors, the one or more processors implement the steps of the various method embodiments described above.

In one embodiment, a computer program product or a computer program is provided, which includes computer-readable instructions, and the computer-readable instructions are stored on a computer-readable storage medium. The processor of the computer device reads the computer-readable instructions from the computer-readable storage medium, and when the processor executes the computer-readable instructions, the computer device performs the steps of the various method embodiments described above.

It is understood by those skilled in the art that all or part of the processes in the above embodiments can be implemented by instructing the relevant hardware with computer-readable instructions. The computer-readable instructions can be stored on a non-volatile computer-readable storage medium, and when executed, can include the processes of the various method embodiments described above. Any reference to memory, storage, databases, or other media in the embodiments provided in this application may include both non-volatile and/or volatile memory. Non-volatile memory may include Read-Only Memory (ROM), Programmable ROM (PROM), Erasable Programmable ROM (EPROM), Electrically Erasable Programmable ROM (EEPROM), or flash memory. Volatile memory may include Random Access Memory (RAM) or external high-speed cache memory. By way of illustration and not limitation, RAM is available in various forms, such as Static RAM (SRAM), Dynamic RAM (DRAM), Synchronous DRAM (SDRAM), Double Data Rate SDRAM (DDR SDRAM), Enhanced SDRAM (ESDRAM), Synchronous Link (Synchlink) DRAM (SLDRAM), Memory Bus Direct RAM (RDRAM), Direct Memory Access Bus Dynamic RAM (DRDRAM), and Memory Bus Dynamic RAM (RDRAM), etc.

## Claims

1. A device configuration method, executed by a computer device (11), wherein the method comprises:
when obtaining device configuration recommendation information under a target space, the computer device (11) pushing and displaying the device configuration recommendation information, wherein the target space is a real space deployed with a plurality of smart devices (121, 122, 123); the device configuration recommendation information is obtained, by a server (13), by analyzing a historical device operation data of the smart devices (121, 122, 123), comprises based on the historical device operation data of the smart devices (121, 122, 123) under the target space, obtaining control operations whose execution frequency in the historical device data are high frequency control operations, when the control operations and execution parameters of the control operations have stable regularity, generating the device configuration recommendation information based on the control operations and execution parameters of the control operations having the stable regularity; and/or, performing correlation of events analysis on user habit data and the control operations of each smart device under the target space within the target time period in the historical device operation data, when analysis indicates that multiple control operations have correlation of events therebetween, generating the device configuration recommendation information based on the multiple control operations having the correlation of events and corresponding execution parameters; wherein, the correlation of events is configured to illustrate a relationship between executing different control operations; the device configuration recommendation information comprises cross device collaborative automated instructions; the device configuration recommendation information is obtained through model analysis; the model periodically learns user habit data of the most recent specified time period to periodically generate the latest recommendation content;responding to a selection operation for at least one device configuration item in the device configuration recommendation information, displaying device control information corresponding to a selected target device configuration item;
responding to a configuration operation for the selected target device configuration item, performing configuration processing on a corresponding smart device based on a target device configuration item, to apply the target device configuration item.

2. The method according to claim **1,** wherein the responding to the configuration operation for the selected target device configuration item, performing configuration processing on the corresponding smart device based on the target device configuration item, comprises:
receiving an update operation for the selected target device configuration item, and updating the device configuration item according to the update operation;
responding to a confirmation operation for an updated selected target device configuration item, performing configuration processing on the corresponding smart device based on the target device configuration item.

3. The method according to claim **1,** wherein the historical device operation data comprises: control operations of the smart devices under the target space and execution parameters of the control operations within a target time period, and the device configuration recommendation information is obtained by:
analyzing the control operations and execution parameters of the control operations of the smart devices under the target space within the target time period to obtain the device configuration recommendation information.

4. The method according to claim **3,** wherein analyzing the control operations and execution parameters of the control operations of the smart devices under the target space within the target time period to obtain the device configuration recommendation information comprises:
for each control operation of the smart devices under the target space within the target time period, when execution frequency of the control operation within the target time period is greater than or equal to a frequency threshold, determining the control operation as a pending analysis control operation;
analyzing execution parameters of pending analysis control operations, to obtain a target control operation and a target execution parameter corresponding to the target control operation;
based on the target control operation and the target execution parameter corresponding to the target control operation, obtaining the device configuration recommendation information.

5. The method according to claim **4,** wherein the execution parameter comprises an execution time, and analyzing the execution parameters of the pending analysis control operations, to obtain the target control operation and the target execution parameter corresponding to the target control operation comprises:
obtaining an expected time of the execution times of the pending analysis control operations;
calculating differences between the expected time and the execution times of all the pending analysis control operations;
when the number of differences less than a preset time difference accounts for a proportion greater than or equal to a preset proportion threshold of the total number of differences, determining the expected time of the execution times of the pending analysis control operations as target execution time corresponding to the target control operation.

6. The method according to claim **1,** wherein the device configuration recommendation information is also obtained by:
obtaining a user habit data within the target time period;
analyzing correlation between the user habit data and the control operations of the smart devices under the target space, as well as the execution parameters of the control operations within the target time period, to determine the device configuration recommendation information corresponding to the user habit data.

7. The method according to any one of claims **1** to **6,** wherein before pushing and displaying the device configuration recommendation information when obtaining the configuration recommendation information under the target space, the method further comprises:
after completing a voice interaction, detecting whether there are any unread device configuration items currently;
when there is an unread device configuration item, outputting voice prompt information, wherein the voice prompt information is configured to remind a user to view the unread device configuration item.

8. A device configuration system, the system comprising:
a server (13), configured to analyze a historical device operation data of smart devices (121, 122, 123), to obtain device configuration recommendation information, and to send the device configuration recommendation information to a computer device (11); wherein the device configuration recommendation information is obtained by analyzing a historical device operation data of the smart devices (121, 122, 123), comprises:
based on the historical device operation data of the smart devices (121, 122, 123) under a target space, obtaining control operations whose execution frequency in the historical device data are high frequency control operations, when the control operations and execution parameters of the control operations have stable regularity, generating the device configuration recommendation information based on the control operations and execution parameters of the control operations having the stable regularity; and/or, performing correlation of events analysis on user habit data and the control operations of each smart device under the target space within the target time period in the historical device operation data, when analysis indicates that multiple control operations have correlation of events therebetween, generating the device configuration recommendation information based on the multiple control operations having the correlation of events and corresponding execution parameters; wherein, the correlation of events is configured to illustrate a relationship between executing different control operations; the device configuration recommendation information comprises cross device collaborative automated instructions; the device configuration recommendation information is obtained through model analysis; the model periodically learns user habit data of the most recent specified time period to periodically generate the latest recommendation content;
the computer device, configured to push and display the device configuration recommendation information when obtaining the device configuration recommendation information under the target space; and respond to a selection operation for at least one device configuration item in the device configuration recommendation information, display device control information corresponding to a selected target device configuration item; and respond to a configuration operation for the selected target device configuration item, perform configuration processing on a corresponding smart device based on a target device configuration item, to apply the target device configuration item; wherein the target space is a real space deployed with a plurality of the smart devices;.

9. The system according to claim **8,** wherein the computer device is further configured to receive an update operation for the selected target device configuration item, and update the device configuration item according to the update operation; and respond to a confirmation operation for an updated selected target device configuration item, perform configuration processing on the corresponding smart device based on the target device configuration item.

10. The system according to claim **8,** wherein the historical device operation data comprises: control operations of the smart devices under the target space and execution parameters of the control operations within a target time period, and the computer device is further configured to obtain the device configuration recommendation information by analyzing the control operations and execution parameters of the control operations of the smart devices under the target space within the target time period.

11. The system according to claim **8,** wherein the computer device is further configured to, for each control operation of the smart devices under the target space within the target time period, when execution frequency of the control operation within the target time period is greater than or equal to a frequency threshold, determine the control operation as a pending analysis control operation, analyze execution parameters of pending analysis control operations to obtain a target control operation and a target execution parameter corresponding to the target control operation, and based on the target control operation and the target execution parameter corresponding to the target control operation, obtain the device configuration recommendation information.

12. The system according to claim **8,** wherein the computer device is further configured to obtain an expected time of the execution times of the pending analysis control operations, calculate differences between the expected time and the execution times of all pending analysis control operations, and when the number of differences less than a preset time difference accounts for a proportion greater than or equal to a preset proportion threshold of the total number of differences, determine the expected time of the execution times of the pending analysis control operations as target execution time corresponding to the target control operation.

13. A device configuration apparatus, the apparatus disposed in a computer device (11), and comprising:
a pushing module, configured to when obtaining device configuration recommendation information under a target space, push and display the device configuration recommendation information; wherein the target space is a real space deployed with a plurality of smart devices (121, 122, 123); the device configuration recommendation information is obtained by analyzing a historical device operation data space of the smart devices (121, 122, 123); the device configuration recommendation information is obtained, by a server (13), by analyzing a historical device operation data of the smart devices, comprises: based on the historical device operation data of the smart devices under the target space, obtaining control operations whose execution frequency in the historical device data are high frequency control operations, when the control operations and execution parameters of the control operations have stable regularity, generating the device configuration recommendation information based on the control operations and execution parameters of the control operations having the stable regularity; and/or, performing correlation of events analysis on user habit data and the control operations of each smart device under the target space within the target time period in the historical device operation data, when analysis indicates that multiple control operations have correlation of events therebetween, generating the device configuration recommendation information based on the multiple control operations having the correlation of events and corresponding execution parameters; wherein, the correlation of events is configured to illustrate a relationship between executing different control operations; the device configuration recommendation information comprises cross device collaborative automated instructions; the device configuration recommendation information is obtained through model analysis; the model periodically learns user habit data of the most recent specified time period to periodically generate the latest recommendation content;
a displaying module, configured to display device control information corresponding to a selected target device configuration item;
a configuration module, configured to respond to a selection operation for at least one device configuration item in the device configuration recommendation information, perform configuration processing on a corresponding smart device based on a selected target device configuration item in response to a configuration operation for the selected target device configuration item, to apply the target device configuration item.

14. A computer device (11) comprising at least one memory and at least one processor, the memory storing computer-readable instructions, the computer-readable instructions is configured to be executed by the processor, and cause the computer device to perform the method of any of claims **1** to **7.**

15. A computer-readable storage medium, storing computer-readable instructions, the computer-readable instructions is configured to be executed by one or more processors, and cause the one or more processors to perform the method of any of claims **1** to **7.**

## Patentansprüche

1. Verfahren zur Gerätekonfiguration, das von einer Computervorrichtung (11) ausgeführt wird, wobei das Verfahren Folgendes umfasst:
Übermitteln und Anzeigen von Gerätekonfigurations-Empfehlungsinformationen durch die Computervorrichtung (11), wenn die Gerätekonfigurations-Empfehlungsinformationen in einem Zielraum erhalten werden; wobei der Zielraum ein physischer Raum ist, in dem eine Vielzahl von intelligenten Geräten (121, 122, 123) eingesetzt wird; die Gerätekonfigurations-Empfehlungsinformationen werden von einem Server (13) durch die Analyse von historischen Gerätebetriebsdaten der intelligenten Geräte (121, 122, 123) erhalten, wobei die Analyse Folgendes umfasst:
basierend auf den historischen Gerätebetriebsdaten der intelligenten Geräte (121, 122, 123) in dem Zielraum, Erhalten von Steuerungsoperationen, deren Ausführungshäufigkeit in den historischen Gerätedaten hoch ist, und wenn die Steuerungsoperationen und Ausführungsparameter der Steuerungsoperationen eine stabile Regelmäßigkeit aufweisen, Erzeugen der Gerätekonfigurations-Empfehlungsinformationen basierend auf den Steuerungsoperationen und Ausführungsparametern der Steuerungsoperationen, die die stabile Regelmäßigkeit aufweisen; und/oder Durchführen einer Ereigniskorrelationsanalyse an Nutzungsgewohnheitsdaten und den Steuerungsoperationen jedes intelligenten Geräts in dem Zielraum innerhalb der Zielzeitspanne in den historischen Gerätebetriebsdaten, und wenn die Analyse anzeigt, dass mehrere Steuerungsoperationen eine Ereigniskorrelation dazwischen aufweisen, Erzeugen der Gerätekonfigurations-Empfehlungsinformationen basierend auf den mehreren Steuerungsoperationen, die die Ereigniskorrelation aufweisen, und entsprechenden Ausführungsparametern; wobei die Ereigniskorrelation dazu konfiguriert ist, eine Beziehung zwischen der Ausführung unterschiedlicher Steuerungsoperationen zu veranschaulichen; wobei die Gerätekonfigurations-Empfehlungsinformationen geräteübergreifende kollaborative Automatisierungsbefehle umfassen; wobei die Gerätekonfigurations-Empfehlungsinformationen durch Modellanalyse erhalten werden; wobei das Modell periodisch Nutzungsgewohnheitsdaten der jüngsten spezifizierten Zeitspanne lernt, um periodisch den neuesten Empfehlungsinhalt zu erzeugen; als Reaktion auf eine Auswahloperation für mindestens ein Gerätekonfigurationselement in den Gerätekonfigurations-Empfehlungsinformationen, Anzeigen von Gerätesteuerungsinformationen, die einem ausgewählten Zielgerätekonfigurationselement entsprechen;
und als Reaktion auf eine Konfigurationsoperation für das ausgewählte Zielgerätekonfigurationselement, Durchführen einer Konfigurationsverarbeitung an einem entsprechenden intelligenten Gerät basierend auf einem Zielgerätekonfigurationselement, um das Zielgerätekonfigurationselement anzuwenden.

2. Verfahren nach Anspruch **1,** wobei das Durchführen der Konfigurationsverarbeitung an dem entsprechenden intelligenten Gerät basierend auf dem Zielgerätekonfigurationselement als Reaktion auf eine Konfigurationsoperation für das ausgewählte Zielgerätekonfigurationselement Folgendes umfasst:
Empfangen einer Aktualisierungsoperation für das ausgewählte Zielgerätekonfigurationselement und Aktualisieren des Gerätekonfigurationselements gemäß der Aktualisierungsoperation;
sowie als Reaktion auf eine Bestätigungsoperation für ein aktualisiertes ausgewähltes Zielgerätekonfigurationselement, Durchführen einer Konfigurationsverarbeitung an dem entsprechenden intelligenten Gerät basierend auf dem Zielgerätekonfigurationselement.

3. Verfahren nach Anspruch **1,** wobei die historischen Gerätebetriebsdaten Folgendes umfassen:
Steuerungsoperationen der intelligenten Geräte in dem Zielraum und Ausführungsparameter der Steuerungsoperationen innerhalb einer Zielzeitspanne, und wobei die Gerätekonfigurations-Empfehlungsinformationen erhalten werden durch:
Analysieren der Steuerungsoperationen und Ausführungsparameter der Steuerungsoperationen der intelligenten Geräte in dem Zielraum innerhalb der Zielzeitspanne, um die Gerätekonfigurations-Empfehlungsinformationen zu erhalten.

4. Verfahren nach Anspruch **3,** wobei das Analysieren der Steuerungsoperationen und Ausführungsparameter der Steuerungsoperationen der intelligenten Geräte in dem Zielraum innerhalb der Zielzeitspanne zum Erhalten der Gerätekonfigurations-Empfehlungsinformationen Folgendes umfasst:
für jede Steuerungsoperation der intelligenten Geräte in dem Zielraum innerhalb der Zielzeitspanne, wenn die Ausführungshäufigkeit der Steuerungsoperation innerhalb der Zielzeitspanne größer oder gleich einem Häufigkeitsschwellenwert ist, Bestimmen der Steuerungsoperation als eine zu analysierende Steuerungsoperation;
Analysieren von Ausführungsparametern der zu analysierenden Steuerungsoperationen, um eine Zielsteuerungsoperation und einen der Zielsteuerungsoperation entsprechenden Zielausführungsparameter zu erhalten;
und basierend auf der Zielsteuerungsoperation und dem der Zielsteuerungsoperation entsprechenden Zielausführungsparameter, Erhalten der Gerätekonfigurations-Empfehlungsinformationen.

5. Verfahren nach Anspruch **4,** wobei der Ausführungsparameter eine Ausführungszeit umfasst und das Analysieren der Ausführungsparameter der zu analysierenden Steuerungsoperationen zum Erhalten der Zielsteuerungsoperation und des der Zielsteuerungsoperation entsprechenden Zielausführungsparameters Folgendes umfasst:
Erhalten einer erwarteten Zeit der Ausführungszeiten der zu analysierenden Steuerungsoperationen;
Berechnen von Differenzen zwischen der erwarteten Zeit und den Ausführungszeiten aller zu analysierenden Steuerungsoperationen;
und wenn die Anzahl der Differenzen, die kleiner als eine voreingestellte Zeitdifferenz sind, einen Anteil ausmacht, der größer oder gleich einem voreingestellten Anteilsschwellenwert der Gesamtzahl der Differenzen ist, Bestimmen der erwarteten Zeit der Ausführungszeiten der zu analysierenden Steuerungsoperationen als eine der Zielsteuerungsoperation entsprechende Zielausführungszeit.

6. Verfahren nach Anspruch **1,** wobei die Gerätekonfigurations-Empfehlungsinformationen ferner erhalten werden durch:
Erhalten von Nutzungsgewohnheitsdaten innerhalb der Zielzeitspanne;
und Analysieren einer Korrelation zwischen den Nutzungsgewohnheitsdaten und den Steuerungsoperationen der intelligenten Geräte in dem Zielraum sowie den Ausführungsparametern der Steuerungsoperationen innerhalb der Zielzeitspanne, um die den Nutzungsgewohnheitsdaten entsprechenden Gerätekonfigurations-Empfehlungsinformationen zu bestimmen.

7. Verfahren nach einem der Ansprüche **1** bis **6,** wobei vor dem Übermitteln und Anzeigen der Gerätekonfigurations-Empfehlungsinformationen beim Erhalten der Konfigurationsempfehlungsinformationen in dem Zielraum das Verfahren ferner Folgendes umfasst:
nach Abschluss einer Sprachinteraktion, Erkennen, ob derzeit ungelesene Gerätekonfigurationselemente vorhanden sind;
und wenn ein ungelesenes Gerätekonfigurationselement vorhanden ist, Ausgeben von Sprachhinweisinformationen, wobei die Sprachhinweisinformationen dazu konfiguriert sind, einen Benutzer daran zu erinnern, das ungelesene Gerätekonfigurationselement anzusehen.

8. Gerätekonfigurationssystem, umfassend:
einen Server (13), wobei der Server (13) dazu konfiguriert ist, historische Gerätebetriebsdaten der intelligenten Geräte (121, 122, 123) zu analysieren, um die Gerätekonfigurations-Empfehlungsinformationen zu erhalten, und die Gerätekonfigurations-Empfehlungsinformationen an eine Computervorrichtung (11) zu senden;
wobei das Erhalten der Gerätekonfigurations-Empfehlungsinformationen durch Analysieren historischer Gerätebetriebsdaten der intelligenten Geräte (121, 122, 123) Folgendes umfasst: basierend auf den historischen Gerätebetriebsdaten der intelligenten Geräte (121, 122, 123) in dem Zielraum, Erhalten von Steuerungsoperationen, deren Ausführungshäufigkeit in den historischen Gerätedaten hoch ist, und wenn die Steuerungsoperationen und Ausführungsparameter der Steuerungsoperationen eine stabile Regelmäßigkeit aufweisen, Erzeugen der Gerätekonfigurations-Empfehlungsinformationen basierend auf den Steuerungsoperationen und Ausführungsparametern der Steuerungsoperationen, die die stabile Regelmäßigkeit aufweisen; und/oder Durchführen einer Ereigniskorrelationsanalyse an Nutzungsgewohnheitsdaten und den Steuerungsoperationen jedes intelligenten Geräts in dem Zielraum innerhalb der Zielzeitspanne in den historischen Gerätebetriebsdaten, und wenn die Analyse anzeigt, dass mehrere Steuerungsoperationen eine Ereigniskorrelation dazwischen aufweisen, Erzeugen der Gerätekonfigurations-Empfehlungsinformationen basierend auf den mehreren Steuerungsoperationen, die die Ereigniskorrelation aufweisen, und entsprechenden Ausführungsparametern; wobei die Ereigniskorrelation dazu konfiguriert ist, eine Beziehung zwischen der Ausführung unterschiedlicher Steuerungsoperationen zu veranschaulichen; wobei die Gerätekonfigurations-Empfehlungsinformationen geräteübergreifende kollaborative Automatisierungsbefehle umfassen; und wobei die Gerätekonfigurations-Empfehlungsinformationen durch Modellanalyse erhalten werden; wobei das Modell periodisch Nutzungsgewohnheitsdaten der jüngsten spezifizierten Zeitspanne lernt, um periodisch den neuesten Empfehlungsinhalt zu erzeugen;
wobei die Computervorrichtung dazu konfiguriert ist, Gerätekonfigurations-Empfehlungsinformationen zu übermitteln und anzuzeigen, wenn die Gerätekonfigurations-Empfehlungsinformationen in einem Zielraum erhalten werden; und als Reaktion auf eine Auswahloperation für mindestens ein Gerätekonfigurationselement in den Gerätekonfigurations-Empfehlungsinformationen Gerätesteuerungsinformationen anzuzeigen, die einem ausgewählten Zielgerätekonfigurationselement entsprechen; und als Reaktion auf eine Konfigurationsoperation für das ausgewählte Zielgerätekonfigurationselement eine Konfigurationsverarbeitung an einem entsprechenden intelligenten Gerät basierend auf einem Zielgerätekonfigurationselement durchzuführen, um das Zielgerätekonfigurationselement anzuwenden; wobei der Zielraum ein physischer Raum ist, in dem eine Vielzahl von intelligenten Geräten eingesetzt wird.

9. System nach Anspruch **8,** wobei die Computervorrichtung ferner dazu konfiguriert ist, eine Aktualisierungsoperation für das ausgewählte Zielgerätekonfigurationselement zu empfangen und das Gerätekonfigurationselement gemäß der Aktualisierungsoperation zu aktualisieren; und als Reaktion auf eine Bestätigungsoperation für ein aktualisiertes ausgewähltes Zielgerätekonfigurationselement eine Konfigurationsverarbeitung an dem entsprechenden intelligenten Gerät basierend auf dem Zielgerätekonfigurationselement durchzuführen.

10. System nach Anspruch **8,** wobei die historischen Gerätebetriebsdaten Folgendes umfassen: Steuerungsoperationen der intelligenten Geräte in dem Zielraum und Ausführungsparameter der Steuerungsoperationen innerhalb einer Zielzeitspanne, und wobei die Computervorrichtung ferner dazu konfiguriert ist, die Gerätekonfigurations-Empfehlungsinformationen durch Analysieren der Steuerungsoperationen und Ausführungsparameter der Steuerungsoperationen der intelligenten Geräte in dem Zielraum innerhalb der Zielzeitspanne zu erhalten.

11. System nach Anspruch **8,** wobei die Computervorrichtung ferner dazu konfiguriert ist, für jede Steuerungsoperation der intelligenten Geräte in dem Zielraum innerhalb der Zielzeitspanne, wenn die Ausführungshäufigkeit der Steuerungsoperation innerhalb der Zielzeitspanne größer oder gleich einem Häufigkeitsschwellenwert ist, die Steuerungsoperation als eine zu analysierende Steuerungsoperation zu bestimmen, Ausführungsparameter der zu analysierenden Steuerungsoperationen zu analysieren, um eine Zielsteuerungsoperation und einen der Zielsteuerungsoperation entsprechenden Zielausführungsparameter zu erhalten, und basierend auf der Zielsteuerungsoperation und dem der Zielsteuerungsoperation entsprechenden Zielausführungsparameter die Gerätekonfigurations-Empfehlungsinformationen zu erhalten.

12. System nach Anspruch **8,** wobei die Computervorrichtung ferner dazu konfiguriert ist, eine erwartete Zeit der Ausführungszeiten der zu analysierenden Steuerungsoperationen zu erhalten, Differenzen zwischen der erwarteten Zeit und den Ausführungszeiten aller zu analysierenden Steuerungsoperationen zu berechnen, und wenn die Anzahl der Differenzen, die kleiner als eine voreingestellte Zeitdifferenz sind, einen Anteil ausmacht, der größer oder gleich einem voreingestellten Anteilsschwellenwert der Gesamtzahl der Differenzen ist, die erwartete Zeit der Ausführungszeiten der zu analysierenden Steuerungsoperationen als eine der Zielsteuerungsoperation entsprechende Zielausführungszeit zu bestimmen.

13. Vorrichtung zur Gerätekonfiguration, wobei die Vorrichtung in einer Computervorrichtung (11) angeordnet ist und Folgendes umfasst:
ein Push-Modul, das dazu konfiguriert ist, wenn Gerätekonfigurations-Empfehlungsinformationen in einem Zielraum erhalten werden, die Gerätekonfigurations-Empfehlungsinformationen zu übermitteln und anzuzeigen; wobei der Zielraum ein physischer Raum ist, in dem eine Vielzahl von intelligenten Geräten (121, 122, 123) eingesetzt wird;
wobei die Gerätekonfigurations-Empfehlungsinformationen durch Analyse historischer Gerätebetriebsdaten der intelligenten Geräte (121, 122, 123) erhalten werden; die Gerätekonfigurations-Empfehlungsinformationen werden von einem Server (13) durch die Analyse von historischen Gerätebetriebsdaten der intelligenten Geräte erhalten, wobei die Analyse Folgendes umfasst:
basierend auf den historischen Gerätebetriebsdaten der intelligenten Geräte in dem Zielraum, Erhalten von Steuerungsoperationen, deren Ausführungshäufigkeit in den historischen Gerätedaten hoch ist, und wenn die Steuerungsoperationen und Ausführungsparameter der Steuerungsoperationen eine stabile Regelmäßigkeit aufweisen, Erzeugen der Gerätekonfigurations-Empfehlungsinformationen basierend auf den Steuerungsoperationen und Ausführungsparametern der Steuerungsoperationen, die die stabile Regelmäßigkeit aufweisen; und/oder Durchführen einer Ereigniskorrelationsanalyse an Nutzungsgewohnheitsdaten und den Steuerungsoperationen jedes intelligenten Geräts in dem Zielraum innerhalb der Zielzeitspanne in den historischen Gerätebetriebsdaten, und wenn die Analyse anzeigt, dass mehrere Steuerungsoperationen eine Ereigniskorrelation dazwischen aufweisen, Erzeugen der Gerätekonfigurations-Empfehlungsinformationen basierend auf den mehreren Steuerungsoperationen, die die Ereigniskorrelation aufweisen, und entsprechenden Ausführungsparametern; wobei die Ereigniskorrelation dazu konfiguriert ist, eine Beziehung zwischen der Ausführung unterschiedlicher Steuerungsoperationen zu veranschaulichen; wobei die Gerätekonfigurations-Empfehlungsinformationen geräteübergreifende kollaborative Automatisierungsbefehle umfassen; wobei die Gerätekonfigurations-Empfehlungsinformationen durch Modellanalyse erhalten werden; und wobei das Modell periodisch Nutzungsgewohnheitsdaten der jüngsten spezifizierten Zeitspanne lernt, um periodisch den neuesten Empfehlungsinhalt zu erzeugen;
ein Anzeigemodul, das dazu konfiguriert ist, Gerätesteuerungsinformationen anzuzeigen, die einem ausgewählten Zielgerätekonfigurationselement entsprechen;
und ein Konfigurationsmodul, das dazu konfiguriert ist, auf eine Auswahloperation für mindestens ein Gerätekonfigurationselement in den Gerätekonfigurations-Empfehlungsinformationen zu reagieren und als Reaktion auf eine Konfigurationsoperation für das ausgewählte Zielgerätekonfigurationselement eine Konfigurationsverarbeitung an einem entsprechenden intelligenten Gerät basierend auf einem ausgewählten Zielgerätekonfigurationselement durchzuführen, um das Zielgerätekonfigurationselement anzuwenden.

14. Computervorrichtung (11)
umfassend mindestens einen Speicher und mindestens einen Prozessor, wobei der Speicher computerlesbare Anweisungen speichert und die computerlesbaren Anweisungen dazu konfiguriert sind, vom Prozessor ausgeführt zu werden und die Computervorrichtung zu veranlassen, das Verfahren nach einem der Ansprüche **1** bis **7** auszuführen.

15. Computerlesbares Speichermedium, das computerlesbare Anweisungen speichert, wobei die computerlesbaren Anweisungen dazu konfiguriert sind, von einem oder mehreren Prozessoren ausgeführt zu werden und den einen oder die mehreren Prozessoren zu veranlassen, das Verfahren nach einem der Ansprüche **1** bis **7** auszuführen.

## Revendications

1. Procédé de configuration de dispositif, exécuté par un dispositif informatique (11), le procédé comprenant :
lors de l'obtention d'informations de recommandation de configuration de dispositif dans un espace cible, le dispositif informatique (11)
pousser et afficher les informations de recommandation de configuration de dispositif ; l'espace cible étant un espace réel déployé avec une pluralité de dispositifs intelligents (121, 122, 123) ; les informations de recommandation de configuration de dispositif étant obtenues par un serveur (13) en analysant des données historiques de fonctionnement de dispositifs intelligents (121, 122, 123) ;
sur la base des données historiques de fonctionnement de dispositifs intelligents (121, 122, 123) dans l'espace cible,
obtenir des opérations de commande dont la fréquence d'exécution dans les données historiques du dispositif est élevée, lorsque les opérations de commande et les paramètres d'exécution des opérations de commande présentent une régularité constante, générer les informations de recommandation de configuration de dispositif sur la base des opérations de commande et des paramètres d'exécution des opérations de commande présentant la régularité constante ; et/ou, effectuer une analyse de corrélation d'événements sur des données d'habitudes d'utilisateur et les opérations de commande de chaque dispositif intelligent dans l'espace cible au cours de la période de temps cible dans les données historiques de fonctionnement de dispositifs, lorsque l'analyse indique que de multiples opérations de commande présentent une corrélation d'événements entre elles, générer les informations de recommandation de configuration de dispositif sur la base des multiples opérations de commande présentant la corrélation d'événements et des paramètres d'exécution correspondants ; la corrélation d'événements étant configurée pour illustrer une relation entre l'exécution de différentes opérations de commande ; les informations de recommandation de configuration de dispositif comprenant des instructions automatisées collaboratives entre dispositifs ; les informations de recommandation de configuration de dispositif étant obtenues par analyse de modèle ; le modèle apprenant périodiquement des données d'habitudes d'utilisateur de la période de temps spécifiée la plus récente pour générer périodiquement le contenu de recommandation le plus récent ; répondre à une opération de sélection d'au moins un élément de configuration de dispositif dans les informations de recommandation de configuration de dispositif, afficher des informations de commande de dispositif correspondant à un élément de configuration de dispositif cible sélectionné ;
répondre à une opération de configuration pour l'élément de configuration de dispositif cible sélectionné, effectuer un traitement de configuration sur un dispositif intelligent correspondant sur la base d'un élément de configuration de dispositif cible, afin d'appliquer l'élément de configuration de dispositif cible.

2. Procédé selon la revendication **1,** dans lequel le fait de répondre à l'opération de configuration pour l'élément de configuration de dispositif cible sélectionné, d'effectuer un traitement de configuration sur le dispositif intelligent correspondant sur la base de l'élément de configuration de dispositif cible, comprend :
recevoir une opération de mise à jour pour l'élément de configuration de dispositif cible sélectionné, et mettre à jour l'élément de configuration de dispositif selon l'opération de mise à jour ;
répondre à une opération de confirmation pour un élément de configuration de dispositif cible sélectionné mis à jour, effectuer un traitement de configuration sur le dispositif intelligent correspondant sur la base de l'élément de configuration de dispositif cible.

3. Procédé selon la revendication **1,** dans lequel les données historiques de fonctionnement de dispositifs comprennent : des opérations de commande des dispositifs intelligents dans l'espace cible et des paramètres d'exécution des opérations de commande au cours d'une période de temps cible, et les informations de recommandation de configuration de dispositif sont obtenues par :
l'analyse des opérations de commande et des paramètres d'exécution des opérations de commande des dispositifs intelligents dans l'espace cible au cours de la période de temps cible pour obtenir les informations de recommandation de configuration de dispositif.

4. Procédé selon la revendication **3,** dans lequel l'analyse des opérations de commande et des paramètres d'exécution des opérations de commande des dispositifs intelligents dans l'espace cible au cours de la période de temps cible pour obtenir les informations de recommandation de configuration de dispositif comprend :
pour chaque opération de commande des dispositifs intelligents dans l'espace cible au cours de la période de temps cible, lorsque la fréquence d'exécution de l'opération de commande au cours de la période de temps cible est supérieure ou égale à un seuil de fréquence, déterminer l'opération de commande comme une opération de commande en attente d'analyse ;
analyser des paramètres d'exécution des opérations de commande en attente d'analyse, pour obtenir une opération de commande cible et un paramètre d'exécution cible correspondant à l'opération de commande cible ;
sur la base de l'opération de commande cible et du paramètre d'exécution cible correspondant à l'opération de commande cible, obtenir les informations de recommandation de configuration de dispositif.

5. Procédé selon la revendication **4,** dans lequel le paramètre d'exécution comprend une heure d'exécution, et l'analyse des paramètres d'exécution des opérations de commande en attente d'analyse, pour obtenir l'opération de commande cible et le paramètre d'exécution cible correspondant à l'opération de commande cible comprend :
obtenir une heure prévue des heures d'exécution des opérations de commande en attente d'analyse ;
calculer des écarts entre l'heure prévue et les heures d'exécution de toutes les opérations de commande en attente d'analyse ;
lorsque le nombre d'écarts inférieurs à une différence de temps prédéfinie représente une proportion supérieure ou égale à un seuil de proportion prédéfini par rapport au nombre total d'écarts, déterminer l'heure prévue des heures d'exécution des opérations de commande en attente d'analyse comme heure d'exécution cible correspondant à l'opération de commande cible.

6. Procédé selon la revendication **1,** dans lequel les informations de recommandation de configuration de dispositif sont également obtenues en :
obtenant des données d'habitudes d'utilisateur au cours de la période de temps cible ;
analysant la corrélation entre les données d'habitudes d'utilisateur et les opérations de commande des dispositifs intelligents dans l'espace cible, ainsi que les paramètres d'exécution des opérations de commande au cours de la période de temps cible, pour déterminer les informations de recommandation de configuration de dispositif correspondant aux données d'habitudes d'utilisateur.

7. Procédé selon l'une quelconque des revendications **1** à **6,** dans lequel avant de pousser et afficher les informations de recommandation de configuration de dispositif lors de l'obtention des informations de recommandation de configuration dans l'espace cible, le procédé comprend en outre :
après avoir terminé une interaction vocale, détecter s'il existe actuellement des éléments de configuration de dispositif non lus ;
lorsqu'il existe un élément de configuration de dispositif non lu, émettre un message d'invite vocal, le message d'invite vocal étant configuré pour rappeler à un utilisateur de consulter l'élément de configuration de dispositif non lu.

8. Système de configuration de dispositif, le système comprenant :
un serveur (13), configuré pour analyser des données historiques de fonctionnement de dispositifs intelligents (121, 122, 123) ; pour obtenir des informations de recommandation de configuration de dispositif, et pour envoyer les informations de recommandation de configuration de dispositif à un dispositif informatique (11) ;
les informations de recommandation de configuration de dispositif étant obtenues par l'analyse de données historiques de fonctionnement de dispositifs intelligents (121, 122, 123) ; comprenant :
sur la base des données historiques de fonctionnement de dispositifs intelligents (121, 122, 123) dans un espace cible, obtenir des opérations de commande dont la fréquence d'exécution dans les données historiques de dispositif est élevée, lorsque les opérations de commande et les paramètres d'exécution des opérations de commande présentent une régularité constante, générer les informations de recommandation de configuration de dispositif sur la base des opérations de commande et des paramètres d'exécution des opérations de commande présentant la régularité constante ; et/ou, effectuer une analyse de corrélation d'événements sur des données d'habitudes d'utilisateur et les opérations de commande de chaque dispositif intelligent dans l'espace cible au cours de la période de temps cible dans les données historiques de fonctionnement de dispositifs, lorsque l'analyse indique que de multiples opérations de commande présentent une corrélation d'événements entre elles, générer les informations de recommandation de configuration de dispositif sur la base des multiples opérations de commande présentant la corrélation d'événements et des paramètres d'exécution correspondants ; la corrélation d'événements étant configurée pour illustrer une relation entre l'exécution de différentes opérations de commande ; les informations de recommandation de configuration de dispositif comprenant des instructions automatisées collaboratives entre dispositifs ; les informations de recommandation de configuration de dispositif étant obtenues par analyse de modèle ; le modèle apprenant périodiquement des données d'habitudes d'utilisateur de la période de temps spécifiée la plus récente pour générer périodiquement le contenu de recommandation le plus récent ;
le dispositif informatique, configuré pour pousser et afficher les informations de recommandation de configuration de dispositif lors de l'obtention des informations de recommandation de configuration de dispositif dans l'espace cible ; et répondre à une opération de sélection d'au moins un élément de configuration de dispositif dans les informations de recommandation de configuration de dispositif, afficher des informations de commande de dispositif correspondant à un élément de configuration de dispositif cible sélectionné ; et répondre à une opération de configuration pour l'élément de configuration de dispositif cible sélectionné, effectuer un traitement de configuration sur un dispositif intelligent correspondant sur la base d'un élément de configuration de dispositif cible, afin d'appliquer l'élément de configuration de dispositif cible ; l'espace cible étant un espace réel déployé avec une pluralité des dispositifs intelligents.

9. Système selon la revendication **8,** dans lequel le dispositif informatique est en outre configuré pour recevoir une opération de mise à jour pour l'élément de configuration de dispositif cible sélectionné, et mettre à jour l'élément de configuration de dispositif selon l'opération de mise à jour ; et répondre à une opération de confirmation pour un élément de configuration de dispositif cible sélectionné mis à jour, effectuer un traitement de configuration sur le dispositif intelligent correspondant sur la base de l'élément de configuration de dispositif cible.

10. Système selon la revendication **8,** dans lequel les données historiques de fonctionnement de dispositifs comprennent : des opérations de commande des dispositifs intelligents dans l'espace cible et des paramètres d'exécution des opérations de commande au cours d'une période de temps cible, et le dispositif informatique est en outre configuré pour obtenir les informations de recommandation de configuration de dispositif par l'analyse des opérations de commande et des paramètres d'exécution des opérations de commande des dispositifs intelligents dans l'espace cible au cours de la période de temps cible.

11. Système selon la revendication **8,** dans lequel le dispositif informatique est en outre configuré pour, pour chaque opération de commande des dispositifs intelligents dans l'espace cible au cours de la période de temps cible, lorsque la fréquence d'exécution de l'opération de commande au cours de la période de temps cible est supérieure ou égale à un seuil de fréquence, déterminer l'opération de commande comme une opération de commande en attente d'analyse, analyser des paramètres d'exécution des opérations de commande en attente d'analyse pour obtenir une opération de commande cible et un paramètre d'exécution cible correspondant à l'opération de commande cible, et sur la base de l'opération de commande cible et du paramètre d'exécution cible correspondant à l'opération de commande cible, obtenir les informations de recommandation de configuration de dispositif.

12. Système selon la revendication **8,** dans lequel le dispositif informatique est en outre configuré pour obtenir une heure prévue des heures d'exécution des opérations de commande en attente d'analyse, calculer des écarts entre l'heure prévue et les heures d'exécution de toutes les opérations de commande en attente d'analyse, et lorsque le nombre d'écarts inférieurs à une différence de temps prédéfinie représente une proportion supérieure ou égale à un seuil de proportion prédéfini par rapport au nombre total d'écarts, déterminer l'heure prévue des heures d'exécution des opérations de commande en attente d'analyse comme heure d'exécution cible correspondant à l'opération de commande cible.

13. Appareil de configuration de dispositif, l'appareil étant disposé dans un dispositif informatique (11) ; et comprenant :
un module de poussée, configuré pour, lors de l'obtention d'informations de recommandation de configuration de dispositif dans un espace cible, pousser et afficher les informations de recommandation de configuration de dispositif ; l'espace cible étant un espace réel déployé avec une pluralité de dispositifs intelligents (121, 122, 123) ; les informations de recommandation de configuration de dispositif étant obtenues par l'analyse de données historiques de fonctionnement de dispositifs intelligents (121, 122, 123) ; le fait que les informations de recommandation de configuration de dispositif soient obtenues par un serveur (13) par l'analyse de données historiques de fonctionnement de dispositifs intelligents comprend :
sur la base des données historiques de fonctionnement de dispositifs intelligents dans l'espace cible, obtenir des opérations de commande dont la fréquence d'exécution dans les données historiques de dispositif est élevée, lorsque les opérations de commande et les paramètres d'exécution des opérations de commande présentent une régularité constante, générer les informations de recommandation de configuration de dispositif sur la base des opérations de commande et des paramètres d'exécution des opérations de commande présentant la régularité constante ; et/ou, effectuer une analyse de corrélation d'événements sur des données d'habitudes d'utilisateur et les opérations de commande de chaque dispositif intelligent dans l'espace cible au cours de la période de temps cible dans les données historiques de fonctionnement de dispositifs, lorsque l'analyse indique que de multiples opérations de commande présentent une corrélation d'événements entre elles, générer les informations de recommandation de configuration de dispositif sur la base des multiples opérations de commande présentant la corrélation d'événements et des paramètres d'exécution correspondants ; la corrélation d'événements étant configurée pour illustrer une relation entre l'exécution de différentes opérations de commande ; les informations de recommandation de configuration de dispositif comprenant des instructions automatisées collaboratives entre dispositifs ; les informations de recommandation de configuration de dispositif étant obtenues par analyse de modèle ; le modèle apprenant périodiquement des données d'habitudes d'utilisateur de la période de temps spécifiée la plus récente pour générer périodiquement le contenu de recommandation le plus récent ;
un module d'affichage, configuré pour afficher des informations de commande de dispositif correspondant à un élément de configuration de dispositif cible sélectionné ;
un module de configuration, configuré pour répondre à une opération de sélection d'au moins un élément de configuration de dispositif dans les informations de recommandation de configuration de dispositif, effectuer un traitement de configuration sur un dispositif intelligent correspondant sur la base d'un élément de configuration de dispositif cible sélectionné en réponse à une opération de configuration pour l'élément de configuration de dispositif cible sélectionné, afin d'appliquer l'élément de configuration de dispositif cible.

14. Dispositif informatique (11), comprenant au moins une mémoire et au moins un processeur, la mémoire stockant des instructions lisibles par ordinateur, les instructions lisibles par ordinateur étant configurées pour être exécutées par le processeur, et amener le dispositif informatique à exécuter le procédé selon l'une quelconque des revendications **1** à **7.**

15. Support de stockage lisible par ordinateur, stockant des instructions lisibles par ordinateur, les instructions lisibles par ordinateur étant configurées pour être exécutées par un ou plusieurs processeurs, et amener le ou les processeurs à exécuter le procédé selon l'une quelconque des revendications **1** à **7.**
